# EUROPEAN PATENT SPECIFICATION

(11) **EP 0 694 369 B1**
(45) Date of publication and mention of the grant of the patent: **06.02.2002**
(21) Application number: 95111053.5
(22) Date of filing: 14.07.1995
(51) Int. Cl.: B25B 17/02, B60B 29/00

(54) **Device to screw and unscrew threaded elements**
Vorrichtung zum Anziehen und Lösen von mit Gewinde versehenen Befestigungselementen
Dispositif pour serrer et desserrer des éléments filetés

(30) Priority: 26.07.1994 IT AP940004
(43) Date of publication of application: 31.01.1996
(73) Proprietor: Voltattorni, Saverio, 63039 S.Benedetto del Tronto (IT); D'Ambrosio, Giuseppe, 63039 S.Benedetto Del Tronto (AP) (IT)
(72) Inventor: Voltattorni, Saverio, 63039 S.Benedetto del Tronto (IT); D'Ambrosio, Giuseppe, 63039 S.Benedetto Del Tronto (AP) (IT)
(74) Representative: Petraz, Gilberto Luigi

(56) References cited:
- EP-A- 0 042 888
- EP-A- 0 491 297
- DE-A- 2 927 989
- FR-A- 2 445 758
- US-A- 3 392 608
- US-A- 3 472 083
- US-A- 3 905 254

## Description

This application for a patent for an industrial invention concerns a device to tighten and untighten screws, nuts and bolts of a certain dimension requiring great torque.

The screwing and unscrewing device according to the invention is applied to threaded elements such as bolts, screws, nuts, etc. which are advantageously of a type requiring great torque for their unclamping, such as the elements associated with the wheels of commercial vehicles, for instance.

Hereinafter we shall refer to the specific employment regarding bolts associated with the wheels of a vehicle, but the device can also be applied to all other types of use.

The spanners and equipment available at the present time on the market do not make possible an easy use since they do not posses irreversible motion and lack effective supports on the fixture points.

It often happens that a lorry driver who has to replace a wheel punctured on the road cannot undo the nuts with the means then available to him and is compelled to call for the prompt assistance of a roadway repair unit with a resulting waste of time and money and with unfavourable effects on deliveries and appointments.

The spanners and devices which are used to screw and unscrew bolts on and from the wheels and which are generally a part of the kit of commercial vehicles such as lorries do not always enable the driver to undo the bolts from the wheel in the event of a puncture since the bolts have been tightened in a workshop with pneumatic equipment.

The use of the normal spanners with actuation levers associated with extensions not only requires a great expenditure of energy but is also dangerous and a cause of frequent accidents due to the slipping of the spanner or to the yielding of the extensions employed.

In fact, the user often has to climb onto the actuation lever and to use the weight of his own body so as to impart the force necessary to unscrew the bolts; these operations are long, burdensome and dangerous.

So as to reduce the force to be applied by the user, devices have so far been disclosed which consist of a spanner-holder shaft solidly associated with a torque-multiplier means and which generate the torque required to screw and unscrew the threaded element.

The spanner-holder shaft includes at one of its ends the spanner cooperating with the threaded element to be screwed or unscrewed and at its other end an actuation lever.

This actuation lever is perpendicular to the spanner-holder shaft and can be rotated on a plane perpendicular to the spanner-holder shaft so as to screw or unscrew the threaded element.

The torque-multiplier means comprises at an intermediate position a stationary anchorage and clamping arm, which is arranged obliquely to the spanner-holder shaft and is caused to cooperate at its free end with the structure on which the bolt to be screwed or unscrewed is fitted.

In the specific case of a bolt associated with a wheel, the stationary anchorage and clamping arm cooperates advantageously with another bolt of the wheel.

The spanner-holder shaft in these devices is subject both to a bending moment and to torque, thus reducing considerably the torque which can be applied to the threaded element to be screwed or unscrewed.

These devices entail also the problem that the spanner-holder shaft is subject to bending and to twisting and that in the first unscrewing phase the torque applied by the spanner-holder shaft to the bolt is less than that required to unscrew the bolt.

Next, the torque and bending moment deform resiliently the spanner-holder shaft, which is charged with potential energy until the bolt starts to become loose.

Contrarotation of the spanner-holder shaft is prevented by mechanical means, such as a catch, which cooperate resiliently with the gearwheel associated with the spanner-holder shaft and which permit rotation only in one direction.

During the whole of this first phase the device is therefore the source of possible danger since, in the event of breakage or faulty working of the catch, the potential energy accumulated by the spanner-holder shaft is discharged all of a sudden, thus setting the spanner-holder shaft and therefore the relative actuation lever in contrarotation, and this situation is the cause of serious accidents for users.

Another problem with these devices lies in the fact that the actuation lever rotates in a plane parallel to the plane of the wheel and the force applied to that lever tends to cause the wheel itself to rotate.

In particular, where the wheel including the bolt to be unscrewed is raised from the ground, the operations of unscrewing and screwing set the wheel in rotation and make the operations very difficult.
DE-A-2 927 989 discloses a device to screw and unscrew threaded elements in accordance with the preamble of claim 1, wherein the worm lies in a plane substantially vertical, while the rotational axis of the gear associated thereto, the spanner-holder shaft and the anchorage element lies in a horizontal plane. For this reason, the casing which supports the spanner-holder shaft and the anchorage element is subject also to a bending moment and, consequently, the spanner-holder shaft is not only subjected to torsion, but it is also subjected to bending.
US-A-3,905,254 discloses a device wherein a motion multiplier (or torque reducer), i.e. not a torque multiplier, is provided in order to quickly rotate the threaded element to screw or unscrew, by means of the spanner or socket. In this device the different anchorage means constituted by the socket members are solely useful to improve the immobilisation of the device itself, but does not solve the problem of the bending moment applied to the spanner-holder shaft. In fact, since each socket member is individually connected to the housing in a different point, any reaction force is not concentrated in the spanner, but is applied to different points, so causing unavoidable bending moment.

The present applicants have designed, tested and embodied this invention to overcome the shortcomings of the state of the art and to achieve further advantages.

This invention is set forth and characterised in the main claim, while the dependent claims describe preferred embodiments of the invention.

The purpose of this invention is to provide a device for the screwing and unscrewing of bolts which is practical, safe, simple and economical.

The device according to the invention is used for the screwing and unscrewing of threaded elements of any size and shape such as bolts, screws and nuts associated, for instance, with the wheels of vehicles.

The device according to the invention is universal and can be adapted readily to all types of use.

The invention of this patent application provides the advantage of being able to take action in any circumstance and at any place with ease and working safety since it eliminates all the dangerous operations arising from the use of the present levers with relative extensions.

The device according to the invention, by applying a reduced force to the actuation lever, enables a considerable torque to be applied without the danger of a rebound of the reaction moment on the actuation lever.

The device according to the invention comprises a device to screw and unscrew threaded elements such as bolts, nuts or screws, comprising a casing; irreversible torque-multiplier means mounted into said casing and comprising a worm and a helical gear cooperating with said worm; an actuation lever connectable to said worm for causing the rotation thereof around its rotational axis; a spanner-holder shaft coaxial to the rotational axis of said helical gear and having a first end connected to said helical gear for rotating therewith and a second end connected to a spanner engageable with one of said threaded elements; the rotational axis of said spanner-holder shaft being substantially perpendicular to the rotational axis of said actuation lever; and means for anchoring said casing to the structure to which said threaded elements are to be screwed or unscrewed, **characterised in that** said anchoring means comprise a hollow engagement element connected to the casing coaxially to the spanner-holder shaft and two anchorage arms connected to the hollow engagement element, the two anchorage arms being disposed or being adapted to be disposed for cooperating with two different threaded elements that are disposed symmetrically with respect to the axis of the spanner-holder shaft; **in that** the rotational axis of said actuation lever is substantially parallel to the plane defined by the two anchorage arms; **and in that** a supporting assembly supports the casing in a direction perpendicular to the plane defined by the two anchorage arms.

According to a preferred embodiment, the two anchorage arms are fitted so as to be able to slide and to be positioned on an auxiliary arm solidly associated to said hollow engagement element.

According to another preferred embodiment, the two anchorage arms are provided at the free end of a clampling fork means.

Preferably, the supporting assembly comprises a base and an adjustable supporting shaft.

The attached figures are given as a non-restrictive example and shows some preferred embodiments of the invention as follows:
Fig.1 is a three-dimensional view of a device to screw and unscrew threaded elements
Fig.2 is a diagram of a variant of the device of Fig.1;
Fig.3 is a three-dimensional knock-down view of the device of Fig.1 in an enlarged scale;
Fig.4 is a three-dimensional view of a first embodiment of the device according to the invention;
Fig.5 is a three-dimensional view of a second embodiment of the device according to the invention;
Fig.6 shows a device with a fork-type attachment for association with a wheel of a vehicle.

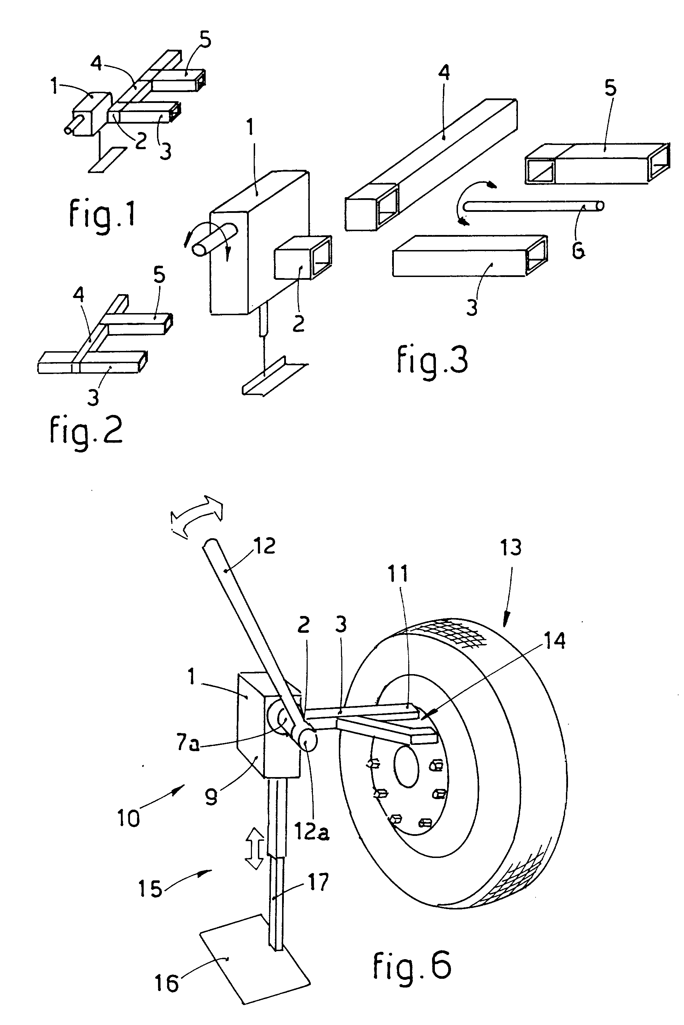

The reference number 10 in the figures denotes generally a device to screw and unscrew threaded elements according to the invention, provided, however, that the devices shown in figures 1 to 3 and 6 do not constitute embodiments of the claimed invention but are included for a better understanding of the claimed invention only.

The device 10 comprises a torque-multiplier means 1 including a worm 7 cooperating with a helical-toothed ring gear or helical gear 8.

The torque-multiplier means 1 is associated with a containing casing 9 including at its frontal end engagement means 2 which in this case are coaxial with the axis of the helical gear 8.

The shaft of the worm 7 acts as a drive shaft, whereas a spanner-holder shaft 6 associated with the helical gear 8 acts as a driven shaft and transmits torque to the threaded element to be screwed or unscrewed.

The spanner-holder shaft 6 is associated removably with, but is rotatably clamped to, the helical gear 8 and includes at its free end anchorage means to clamp a spanner 11 having a shape and size mating with the threaded element to be screwed or unscrewed.

An actuation lever 12 cooperates with a protruding portion 7a of the shaft of the worm 7 and is perpendicular and clamped rotatably to that shaft so as to set the shaft in rotation during the screwing or unscrewing operations.

The axis of rotation of the actuation lever 12 lies on a substantially horizontal plane parallel to the substantially horizontal plane containing the axis of the threaded element to be screwed or unscrewed, these two axes being perpendicular to each other.

The reduction ratio between the worm 7 and the helical gear 8 is determined by selecting suitably the ratio between the number of threads of the worm 7 and the number of teeth of the helical gear 8.

The device 10 according to the invention includes anchorage arms which extend forwards parallel to the spanner-holder shaft 6 and with which the device 10 is clamped to a wheel 13 with which is associated the threaded element to be screwed or unscrewed.

In the example of Figs. 1 and 2 the anchorage arms comprise a first hollow anchorage arm 3, which is coaxial with and surrounds the spanner-holder shaft 6; this first hollow anchorage arm 3 is solidly associated with the engagement means 2 included on the containing casing 9.

The anchorage arms comprise also an auxiliary arm 4 perpendicular to the first anchorage arm 3 and solidly associated with the engagement means 2; to this auxiliary arm 4 a second anchorage arm 5 parallel to the first anchorage arm 3 is fitted so as to be able to slide freely along the auxiliary arm 4.

In this way it is possible to position the second anchorage arm 5 so as to make it cooperate at a desired determined point with the structure to which the threaded element to be screwed or unscrewed is secured.

To the free end of the first and second anchorage arms 3, 5 there may be applied anchorage means such as ferrules, pins, clamps or other analogous elements with which those arms 3, 5 are clamped to the structure, in this case to the wheel 13, to which the threaded element to be screwed or unscrewed is fixed.

With the device 10 a perfect balance is achieved between the actuation torque imparted by the spanner-holder shaft 6 and the reacting torque exerted by the anchorage arms 3, 5 acting on their respective anchorage points consisting, for instance, of screws, bolts, nuts or other means associated with the wheel 13 to which the threaded element to be screwed or unscrewed is fitted.

In this way the spanner-holder shaft 6 is stressed only with torque but is not subject to bending or shear.

This balance is attained owing to the rotation-prevention engagement with which the torque-multiplier means 1 is provided, and owing to the arms 3, 4 , 5, which interact between the torque-multiplier means 1 and the relative supporting or anchorage points, thus preventing the accumulated tensions from being discharged onto the user.

The special configuration of the arms 3, 4 , 5 suitable to withstand the torque and the bending moments induced by the torque-multiplier means 1 enables operations to be carried on also in the presence of small obstacles (axle hubs) possibly positioned between two elements to be unclamped or clamped.

The working of the machine is obtained by actuating the worm 7 of the torque-multiplier means 1, the worm 7 causing rotation of the helical-toothed ring gear 8 (with combinations of ring gear/worm ratios according to a preferred form of embodiment).

The torque applied to the worm 7 is multiplied by the helical-toothed ring gear 8 and is transmitted along its axis to the spanner-holder shaft 6 and therealong to the elements to be unclamped or clamped.

The task of the arms 3, 4, 5 is to provide, by means of the relative supporting or anchorage points, a torque equal and contrary to that transmitted by the torque-multiplier means 1 by means of the spanner-holder shaft 6 to the spanner acting on the elements to be unclamped or clamped.

In the form of embodiment shown in Fig.2 the auxiliary arm 4 is directly engaged with the first anchorage arm 3 and can be moved longitudinally in relation thereto 3.

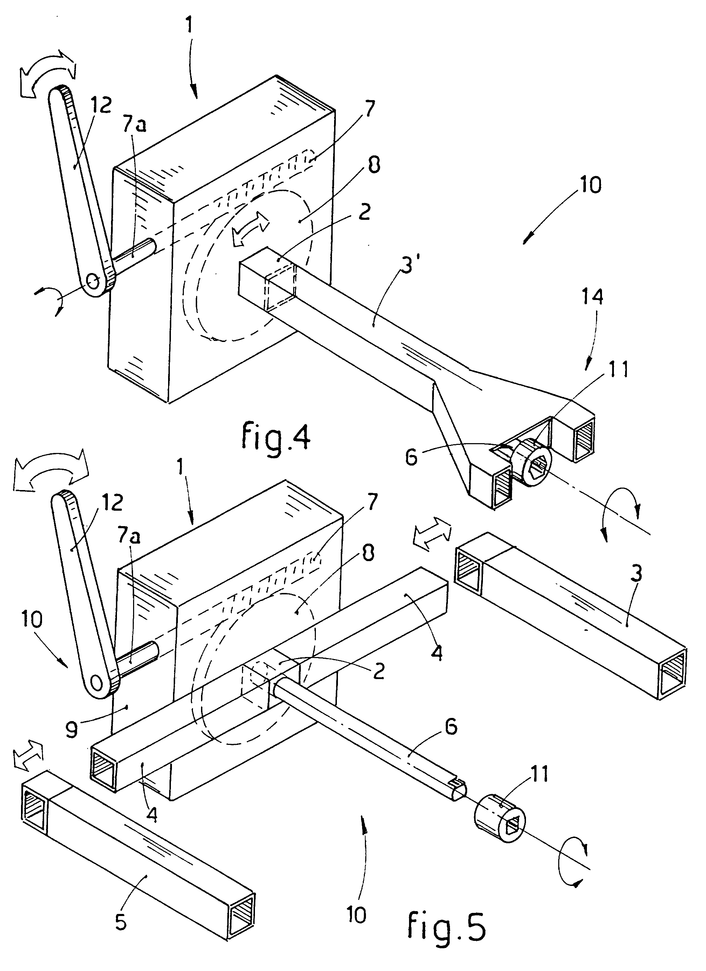

In the form of embodiment shown in Fig.5 the auxiliary arm 4 extends perpendicularly on both sides of the spanner-holder shaft 6 and the first 3 and second 5 anchorage arms respectively are positioned on opposite sides of the spanner-holder shaft 6 and can slide on the auxiliary arm 4.

In this case, the auxiliary arm 4 is straight and the anchorage arms 3, 5 and the spanner-holder shaft 6 lie on one and the same plane.

According to a variant which is not shown here, the auxiliary arm 4 is conformed as a "V" with its vertex cooperating with the engagement means 2.

In the form of embodiment shown in Fig.4, the anchorage arms are stationary and cannot be adjusted, while the device 10 includes one single hollow anchorage arm 3' coaxial with the spanner-holder shaft 6, this anchorage arm 3' being rotatably clamped to the engagement means 2 and including fork means 14 at its free end.

These fork means 14 include two stationary anchorage elements which cooperate with respective anchorage points associated with the wheel 13 on which is fitted the threaded element to be screwed or unscrewed.

In this case the two stationary anchorage elements lie on the same plane passing through the axis of the spanner-holder shaft 6.

According to a variant the fork means 14 are conformed in such a way as to include the two stationary anchorage elements rotated at an angle to the axis of the spanner-holder shaft 6.

The anchorage arm 3' and the fork means 14 are able to withstand both the torque and the bending moment induced by the device 10.

According to a variant which is not shown here, the device 10 according to the invention comprises at least two auxiliary arms 4, which are positioned radially about the spanner-holder shaft 6 and are clamped rotatably to the containing casing 9, each of these auxiliary arms 4 cooperating with at least one relative anchorage arm 3, 5.

According to the form of embodiment shown in Fig.6, the device 10 comprises a supporting assembly 15 which can be adjusted for height and is associated with the containing casing 9 so as to bear the weight of the device 10 during the screwing or unscrewing operations.

In this case, the supporting assembly 15 includes a base 16, which is rested on the ground, and a vertical supporting shaft 17 which can be adjusted for length.

## Claims

1. A device to screw and unscrew threaded elements such as bolts, nuts or screws, comprising a casing (9) ; irreversible torque-multiplier means (1) mounted into said casing (9) and comprising a worm (7) and a helical gear (8) cooperating with said worm (7); an actuation lever (12) connectable to said worm (7) for causing the rotation thereof around its rotational axis; a spanner-holder shaft (6) coaxial to the rotational axis of said helical gear (8) and having a first end connected to said helical gear (8) for rotating therewith and a second end connected to a spanner (11) engageable with one of said threaded elements; the rotational axis of said spanner-holder shaft (6) being substantially perpendicular to the rotational axis of said actuation lever (12); and means for anchoring said casing (9) to the structure (13) to which said threaded elements are to be screwed or unscrewed, **characterised in that** said anchoring means comprise a hollow engagement element (2) connected to the casing (9) coaxially to the spanner-holder shaft (6) and two anchorage arms (3, 5; 14) connected to the hollow engagement element (2), the two anchorage arms being disposed (14 - fig. 4) or being adapted to be disposed (3,5 - fig. 5) for cooperating with two different threaded elements that are disposed symmetrically with respect to the axis of the spanner-holder shaft (6); **in that** the rotational axis of said actuation lever (12) is substantially parallel to the plane defined by the two anchorage arms; **and in that** a supporting assembly (15) supports the casing (9) in a direction perpendicular to the plane defined by the two anchorage arms.

2. Device as in claim 1, wherein the two anchorage arms (3, 5) are fitted so as to be able to slide and to be positioned on an auxiliary arm (4) solidly associated to said hollow engagement element (2).

3. Device as in claims 1, wherein the two anchorage arms are provided at the free end of a clamping fork means (14).

4. Device as in claim 1, in which the supporting assembly (15) comprises a base (16) and an adjustable supporting shaft (17).

## Patentansprüche

1. Eine Vorrichtung zum Schrauben und Lösen von geschnittenen Elemente wie Bolzen, Muttern oder Schrauben, welche ein Gehäuse (9), ein nicht umkehrbares Drehmomentübersetzungsgetriebe (1), das in diesem Gehäuse (9) eingebaut ist und eine endlose Schraube (7) und ein mit dieser endlosen Schraube (7) zusammenwirkendes Schrägzahnrad (8) umfaßt, einen Betätigungshebel (12), der mit dieser endlosen Schraube (7) zum Bewirken ihres Drehens um ihre Drehachse verbindbar ist, und eine als Schlüsselträger dienende Welle (6), die koaxial zur Drehachse dieses Schrägzahnrades (8) ist und deren erstes Ende mit diesem Schrägzahnrad (8) zum gemeinsamen Drehen und deren zweites Ende mit einem in ein dieser geschnittenen Elemente einsetzbaren Schlüssel (11) verbunden ist, aufweist, wobei die Drehachse dieser als Schlüsselträger dienenden Welle (6) wesentlich senkrecht zur Drehachse dieses Betätigungshebels (12) ist und außerdem diese Vorrichtung Mittel zum Verankern dieses Gehäuses (9) in die Struktur (13), bei der diese geschnittenen Elemente geschraubt oder gelöst werden sollen, aufweist, **dadurch gekennzeichnet, daß** diese Verankerungsmittel ein hohles Einsetzelement (2), der mit dem Gehäuse (9) koaxial zur als Schlüsselträger dienenden Welle (6) verbunden ist, sowie zwei mit dem hohlen Einsetzelement (2) verbundene Verankerungsarme (3, 5; 14) aufweisen, wobei diese zwei Verankerungsarme (5) für das Zusammenwirken mit zwei verschiedenen geschnittenen Elementen, die in bezug auf die Achse der als Schlüsselträger dienenden Welle (6) symmetrisch angeordnet sind, angeordnet (14 - Fig. 4) oder auf diese Anordnung (3, 5 - Fig. 5) vorbereitet sind, daß die Drehachse dieses Betätigungshebels (12) wesentlich parallel zur von diesen zwei Verankerungsarmen bestimmten Ebene ist, und daß eine Abstützgruppe (15) das Gehäuse (9) in einer zu dieser von diesen zwei Verankerungsarmen bestimmten Ebene senkrechten Richtung abstützt.

2. Vorrichtung nach Anspruch 1, bei der die zwei Verankerungsarme (3, 5) so aufgestellt sind, daß sie gleiten und auf einem mit diesem hohlen Einsetzelement (2) fest verbundenen Hilfsarm (4) angeordnet werden können.

3. Vorrichtung nach Anspruch 1, bei der die zwei Verankerungsarme am freien Ende eines gabelförmigen Spannmittels (14) vorgesehen sind.

4. Vorrichtung nach Anspruch 1, bei der die Abstützgruppe (15) eine Grundplatte (16) und einen verstellbaren Träger (17) aufweist.

## Revendications

1. Un dispositif pour visser et dévisser des éléments filetés comme boulons, écrous ou vis, comprenant une boîte (9); un moyen multiplicateur de couple irreversible (1) installé dans la boîte (9) susdite et comprenant une vis sans fin (7) et un engrenage hélicoidal (8) qui coopère avec la vis sans fin (7) susdite; un levier d'actionnement (12) reliable à la vis sans fin (7) susdite pour provoquer sa rotation autour de son axe de rotation; un arbre porte-clé (6) coaxial à l'axe de rotation de l'engrenage hélicoidal (8) susdit et ayant une première extrémité reliée à l'engrenage hélicoidal (8) susdit pour tourner avec celui-ci et une deuxième extrémité reliée à une clé (11) engageable à un des éléments filetés susdits, l'axe de rotation de l'arbre porte-clé (6) susdit étant fondamentalement perpendiculaire à l'axe de rotation du levier d'actionnement (12) susdit; et des moyens pour ancrer la boîte (9) susdite sur la structure (13) dans laquelle les éléments filetés susdits doivent être vissés ou dévissés, **caractérisé en ce que** les moyens d'ancrage susdits comprennent un élément d'engagement creux (2) relié à la boîte (9) de façon coaxiale à l'arbre porte-clé (6) et deux bras d'ancrage (3, 5; 14) reliés à l'élément d'engagement creux (2), le deux bras d'ancrage (5) étant disposés (14 - fig. 4) ou bien étant adaptés pour être disposés (3, 5 - fig. 5) pour coopérer avec deux éléments filetés différents qui sont disposés symétriquement par rapport à l'axe de l'arbre porte-clé (6); **en ce que** l'axe de rotation du levier d'actionnement (12) susdit est fondamentalement parallèle au plan déterminé par les deux bras d'ancrage; et **en ce que** un groupe-support (15) supporte la boîte (9) dans une direction perpendiculaire au plan déterminé par les deux bras d'ancrage.

2. Dispositif selon la revendication 1, dans lequel les deux bras d'ancrage (3, 5) sont installés de façon à être en mesure de glisser et d'être positionnés sur un bras auxiliaire (4) associé solidairement à l'élément d'engagement creux (2) susdit.

3. Dispositif selon la revendication 1, dans lequel les deux bras d'ancrage sont prévus sur l'extrémité libre d'un moyen de blocage à fourche (14).

4. Dispositif selon la revendication 1, dans lequel le groupe-support (15) comprend une embase (16) et une tige-support réglable (17).
